(19) Europäisches Patentamt
European Patent Office
Office européen des brevets

(11) **EP 0 820 893 B1**

(12) **EUROPÄISCHE PATENTSCHRIFT**

(45) Veröffentlichungstag und Bekanntmachung des Hinweises auf die Patenterteilung:
**09.04.2003  Patentblatt 2003/15**

(51) Int Cl.⁷: **B60L 9/28**, H02M 5/45, H02M 3/28, H02M 3/337

(21) Anmeldenummer: **97112480.5**

(22) Anmeldetag: **19.07.1997**

(54) **Antriebssystem für ein Schienenfahrzeug und Ansteuerungsverfahren hierzu**

Traction system for rail vehicle and control method therefor

Système de traction pour véhicule sur rails et procédé de commande correspondant

(84) Benannte Vertragsstaaten:
**AT DE FR IT NL**

(30) Priorität: **26.07.1996  DE 19630284**

(43) Veröffentlichungstag der Anmeldung:
**28.01.1998  Patentblatt 1998/05**

(73) Patentinhaber: **DaimlerChrysler AG
70567 Stuttgart (DE)**

(72) Erfinder:
 • **Steiner, Michael
   68723 Schwetzingen (DE)**
 • **Reinhold, Harry, Dr.
   69115 Heidelberg (DE)**

(74) Vertreter: **Akers, Noel James
   Howrey Simon Arnold & White,
   City Point,
   One Ropemaker Street
   London EC2Y 9HS (GB)**

(56) Entgegenhaltungen:
**US-A- 5 088 017       US-A- 5 121 315**

 • **OSTLUND S: "INFLUENCE OF THE CONTROL PRINCIPLE ON A HIGH-VOLTAGE INVERTER SYSTEM FOR REDUCTION OF TRACTION-TRANSFORMER WEIGHT" 1.März 1990 , ELEKTRISCHE BAHNEN (FOR THE WHOLE COLLECTION USE BOCA..LI MAX), VOL. 88, NR. 3, PAGE(S) 110 - 115 XP000113877 * Zusammenfassung; Abbildungen 1,8 ***
 • **CARPITA M ET AL: "PRELIMINARY DESIGN OF A 18 KV LOCOMOTIVE" 19.September 1995 , EPE '95: 6TH. EUROPEAN CONFERENCE ON POWER ELECTRONICS AND APPLICATIONS, SEVILLA, SEPT. 19 - 21, 1995, VOL. 2, PAGE(S) 2.153 - 2.158 , EUROPEAN POWER ELECTRONICS AND DRIVES ASSOCIATION XP000537737 * Seite 2153; Abbildung 5 ***
 • **PATENT ABSTRACTS OF JAPAN vol. 008, no. 017 (E-223), 25.Januar 1984 & JP 58 179163 A (ZENERARU:KK), 20.Oktober 1983,**
 • **GERBER U: "DER EUROSPRINTER. DEUTSCHE UNIVERSALDREHSTROMLOK AUF SCHWEIZER SCHIENEN" 11.März 1994 , TECHNISCHE RUNDSCHAU TRANSFER, VOL. 86, NR. 10, PAGE(S) 58 - 61 XP000438165 * Abbildung 3 ***
 • **PATENT ABSTRACTS OF JAPAN vol. 004, no. 175 (E-036), 3.Dezember 1980 & JP 55 120375 A (FUJI ELECTRIC CO LTD), 16.September 1980,**

Printed by Jouve, 75001 PARIS (FR)

**Beschreibung**

Die Erfindung bezieht sich auf ein Antriebssystem für ein Schienenfahrzeug mit mehreren, zwischen einem Fahrdraht/Stromabnehmer-System und einem Rad/Schiene-System über mindestens eine Drossel in Reihe geschalteten Teilstromrichtersystemen sowie auf ein Ansteuerverfahren hierzu.

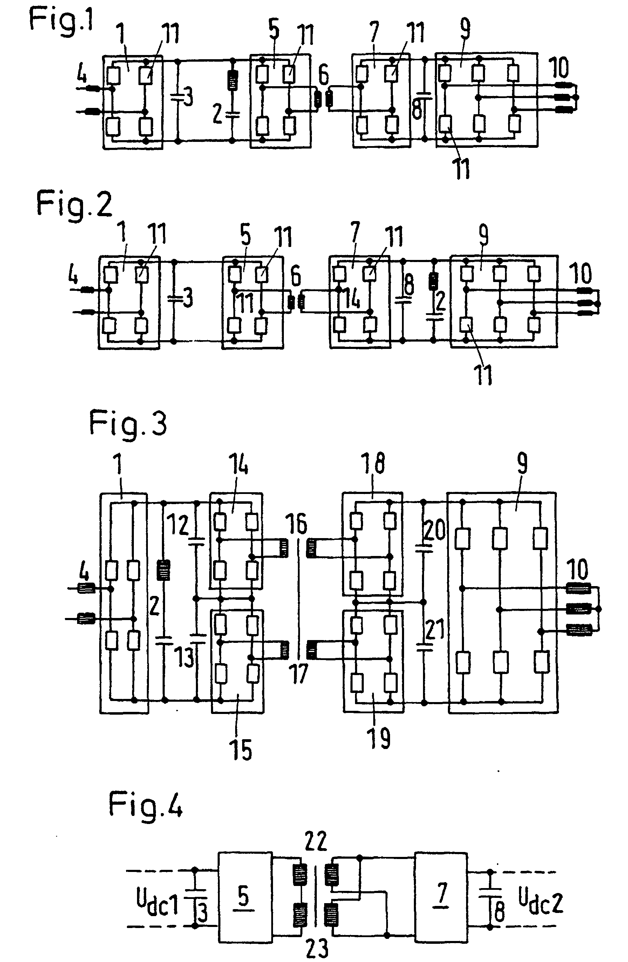

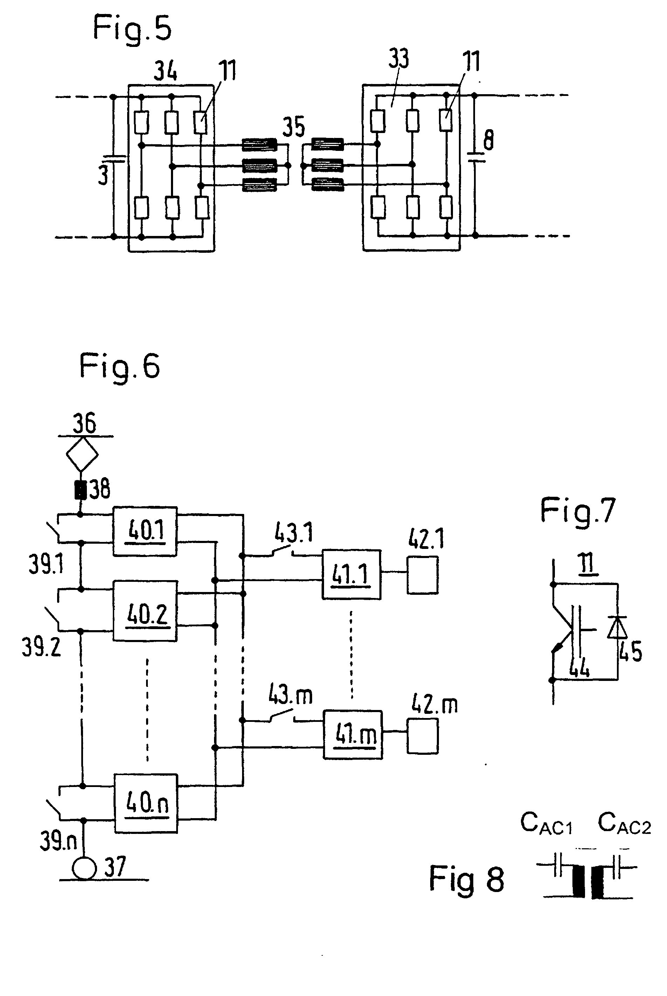

Aus S. Östlund, "Influence of the control principle on a high-voltage inverter system for reduction of traction-transformer weight", 1. März 1990, Elektrische Bahnen, Vol. 88, Nr. 3, Seiten 110 bis 115 ist in Fig. 1 auf Seite 110 ein Antriebssystem für ein Schienenfahrzeug angegeben, bei dem ein Transformator vorgesehen ist, der primärseitig über eine Drossel und einen Direktumrichter mit einem Wechselspannungsnetz (zwischen einem Fahrdraht/Stromabnehmer-System und einem Rad/Schiene-System) verbunden ist und sekundärseitig über einen Vierquadrantensteller mit Saugkreis, einen Zwischenkreiskondensator und einen Wechselrichter einen Antriebsmotor des Schienenfahrzeuges speist. Der Transformator wird dabei mit einer Frequenz von einigen hundert Hz betrieben. Der Direktumrichter erfordert symmetrisch sperrende Halbleiterventile. Fig. 8 auf der Seite 115 zeigt eine Konfiguration mit einem Transformator, der über mehrere Primärwicklungen mit in Serie geschalteten Direktumrichtem beschaltet ist, welche wiederum über eine Drossel zwischen einem Fahrdraht/Stromabnehmer-System und einem Rad/Schiene-System angeordnet sind. An die einzige Sekundärwicklung dieses Transformators ist ein Vierquadrantensteller mit Saugkreis und einem Zwischenkreiskondensator angeschlossen.

Der Erfindung liegt die Aufgabe zugrunde, ein Antriebssystem für ein Schienenfahrzeug anzugeben, dessen Stromrichter mit Halbleiterschaltern üblicher Sperrspannungsfestigkeit betreibbar sind. Des weiteren soll ein Ansteuerverfahren hierzu angegeben werden.

Diese Aufgabe wird hinsichtlich des Antriebssystems erfindungsgemäß dadurch gelöst, dass jedes Teilstromrichtersystem aus mindestens einem primärseitigen Vierquadrantensteller, mindestens einem primärseitigen Zwischenkreiskondensator, mindestens einem primärseitigen Wechselrichter und mindestens einem Transformator besteht und dass sekundärseitig parallelgeschaltete Teilstromrichtersysteme einen gemeinsamen sekundärseitigen Wechselspannungszwischenkreis bilden.

Diese Aufgabe wird hinsichtlich des Antriebssystems erfindungsgemäß alternativ dadurch gelöst, dass jedes Teilstromrichtersystem aus mindestens einem primärseitigen Vierquadrantensteller, mindestens einem primärseitigen Zwischenkreiskondensator, mindestens einem primärseitigen Wechselrichter, mindestens einem Transformator und mindestens einem sekundärseitigen Vierquadrantensteller besteht und dass sekundärseitig parallelgeschaltete Teilstromrichtersysteme einen gemeinsamen sekundärseitigen Gleichspannungszwischenkreis bilden.

Die Aufgabe wird hinsichtlich des Verfahrens durch ein Verfahren zur Ansteuerung der Halbleiterschalter der transformatorseitigen Stromrichter eines Antriebssystems gelöst, bei dem diese Halbleiterschalter mit einer Schaltfrequenz $f_S$ betrieben werden, die näherungsweise eine der folgenden Bedingungen erfüllt:

$$f_S = \frac{1}{\pi \sqrt{L_S \cdot C_E}}$$

oder

$$f_S = \frac{1}{2\pi \sqrt{L_S \cdot C_E}}$$

wobei $L_S$ die Summe der Streuinduktivitäten des Transformators ist und $C_E$ die Ersatzkapazität in den primärseitigen und sekundärseitigen Teilsystemen darstellt, mit

$$C_E = \frac{C_{DC1} \cdot C_{DC2}}{C_{DC1} + C_{DC2}},$$

wobei $C_{DC1}$ die Gleichspannungskapazität im primärseitigen Teilsystem und $C_{DC2}$ die Gleichspannungskapazität im sekundärseitigen Teilsystem darstellt.

Die mit der Erfindung erzielbaren Vorteile bestehen insbesondere darin, daß die relativ hohe Wechselspannung zwischen Fahrdraht/Stromabnehmer-System und Rad/Schiene-Systeme entsprechend der Anzahl der Teilstromrichtersysteme 40.1...40.n aufgeteilt wird, so daß jeder Vierquadrantensteller bzw. Wechselrichter der Teilstromrichtersysteme mit Halbleiterschaltern üblicher Sperrspannungsfestigkeit betreibbar ist. Die Anzahl der sekundärseitig parallelgeschalteten Teilstromrichtersysteme richtet sich nach der erforderlichen Anzahl von Antriebsmotoren.

Durch die mit relativ hoher Frequenz betriebenen Transformatoren erfolgt eine Potentialtrennung zwischen dem speisenden Wechselspannungsnetz und den Antriebsmotoren, ohne daß dabei die Transformatoren ein hohes Gewicht aufweisen und einen großen Raumbedarf erfordern. Im Vergleich zu den bei Schienenfahrzeugen üblicherweise im Eingangskreis verwendeten Transformatoren ist neben dem Gewicht und Raumbedarf auch die Verlustleistung der mit relativ hoher Frequenz betriebenen Transformatoren wesentlich reduziert. Infolge der harten Kopplung der beiden Teilsysteme bestehen die Möglichkeiten,

1. einen Saugkreis im ersten oder im zweiten oder in beiden Teilstromrichtersystemen anzuschließen oder

2. durch Vergrößerung der Gesamtkapazität ganz auf Saugkreise zu verzichten. Letztere Möglichkeit ist in heute üblichen Systemen aufgrund begrenzter, maximaler Zwischenkreiskurzschlußströme nicht gegeben. Das der Erfindung zugrundeliegende Antriebssystem weist diese Begrenzung wegen der in den Teilstromrichtersystemen verteilten Kapazitäten nicht auf. Der Wegfall der induktiven Bauelemente des (der) Saugkreise(s) führt zu einer weiteren Gewichtsreduktion.

Mittels des vorgeschlagenen Ansteuerverfahrens werden vorteilhaft die Schaltverluste der mit den Transformatoren verbundenen Halbleiterschalter in hohem Maße reduziert.

Vorteilhafte Ausgestaltungen der Erfindung sind in den Unteransprüchen gekennzeichnet.

Die Erfindung wird nachstehend anhand der in der Zeichnung dargestellten Ausführungsbeispiele erläutert. Es zeigen:

Fig. 1     eine einstufige Grundform der Antriebsschaltung,

Fig. 2     eine Alternative zur Antriebsschaltung gemäß Fig. 1,

Fig. 3     eine zweistufige Grundform der Antriebsschaltung,

Fig. 4, 5   weitere alternative Antriebsschaltungen,

Fig. 6     ein Antriebskonzept für ein Schienentriebfahrzeug mit mehreren netzseitig seriengeschalteten Teilstromrichtersystemen,

Fig. 7     die Ausbildung eines verwendeten Halbleiterschalters,

Fig. 8     eine Ausbildung mit zusätzlichen Wechselspannungskondensatoren.

In Fig. 1 ist eine einstufige Grundform der Antriebsschaltung dargestellt. Es ist ein Vierquadrantensteller 1 (Gleichrichter) mit Saugkreis 2 und Zwischenkreiskondensator 3 (Gleichspannungszwischenkreis) zu erkennen. Wechselspannungsseitig ist der Vierquadrantensteller 1 über ein Eingangsdrosselsystem 4 an ein Wechselspannungsnetz angeschlossen. Am Zwischenkreis liegt ein Wechselrichter 5, der wechselspannungsseitig mit der Primärwicklung eines Transformators 6 beschaltet ist. An die Sekundärwicklung des Transformators 6 ist ein Vierquadrantensteller 7 (Gleichrichter) angeschlossen, der gleichspannungsseitig über einen Zwischenkreiskondensator 8 (Gleichspannungszwischenkreis) mit einem Wechselrichter 9 (Maschinenstromrichter) beschaltet ist. An den Wechselrichter 9 ist als Last ein Antriebsmotor 10 des Schienenfahrzeuges angeschlossen. Als Transformator wird vorzugsweise ein Transformator mit sehr geringer Streuinduktivität verwendet.

Wesentliches Merkmal des Antriebssystems ist die hohe Taktfrequenz im Bereich von 8 bis 20 kHz der Halbleiterschalter 11 der mit dem Transformator verbundenen, die Gleichspannungswandlung bewirkenden Stromrichter, d. h. des Wechselrichters 5 und des Vierquadrantenstellers 7. Vorteilhaft werden hierdurch Gewicht und Raumbedarf des Transformators wesentlich herabgesetzt und die vom menschlichen Ohr wahrnehmbaren Geräusche reduziert. Die Halbleiterschalter 11 des Vierquadrantenstellers 1 und des Wechselrichters 9 takten im Bereich kleinerer Schaltfrequenzen bis etwa 500 Hz.

Die genannten Obergrenzen der Frequenzen sind durch die Eigenschaften der derzeit verfügbaren Halbleiterschalter bedingt. Sobald entsprechende Bauelemente für höhere Frequenzen verfügbar sind, können auch höhere Taktfrequenzen gewählt werden.

Ein weiteres wichtiges Merkmal des Antriebssystems ist die sehr harte Kopplung der über den Transformator gekoppelten beiden Teilsysteme. Infolge der harten Kopplung wirken sich kapazitive Baukomponenten des einen Teilsystems unmittelbar und stark auf das andere Teilsystem auf. Hierdurch können die Kapazitäten der Spannungszwischenkreise vorteilhaft in einem wählbaren Verhältnis auf beide Teilsysteme aufgeteilt werden. Die Zwischenkreiskondensatoren 3, 8 wirken wie parallelgeschaltete Kondensatoren. Das hat den Vorteil, daß die beim Zwischenkreiskurzschluß in einem Stromrichterzweigpaar auftretenden Kurzschlußströme reduziert werden. Dies ist wichtig, da den Halbleiterschaltern keine strombegrenzenden Induktivitäten in Serie geschaltet sind. Dies wiederum reduziert die im Betrieb auftretenden Verlustleistungen. Des weiteren ist infolge der harten Kopplung der Saugkreis 2 für beide Vierquadrantensteller 1, 7 wirksam. Demzufolge kann der Saugkreis 2 auch im Zwischenkreis des zweiten Teilsystems angeordnet sein, wie die in Fig. 2 dargestellte Alternative zur Antriebsschaltung zeigt, oder bei einer Vergrößerung der gesamten Zwischenkreiskapazität ganz entfallen.

In Fig. 3 ist eine zweistufige Grundform der Antriebsschaltung dargestellt. Bei dieser zweistufigen Grundform sind das Eingangsdrosselsystem 4, der Vierquadrantensteller 1, der Saugkreis 2 und der Wechselrichter 9 unverändert im Vergleich zur Grundform gemäß Fig. 1. Es sind jedoch zwei in Serie geschaltete Zwischenkreiskondensatoren 12, 13 im ersten Teilsystem vorgesehen, an welche zwei Wechselrichter 14, 15 angeschlossen sind, die wechselspannungsseitig jeweils mit zwei Wicklungen eines Vier-Wicklungstransformators, in der Zeichnung, Fig. 3 als zwei magnetisch gekoppelte Transformatoren 16, 17 dargestellt, verbunden sind. An beide Sekundärwicklungen dieses Transformators 16, 17 ist ein eigener Vierquadrantensteller 18, 19 angeschlossen. Diese Vierquadrantensteller 18, 19 des zweiten Teilsystems speisen über zwei in Serie geschaltete Zwischenkreiskondensatoren 20, 21 den gemeinsamen Zwischenkreis des zweiten Teilsystems. Eine Symmetrierung der geteilten Zwischenkreisspannung ist durch die Verwendung der Vier-Wicklungstransformatoren gewährleistet.

Die zweistufige Grundform hat gegenüber der einstufigen Grundform den Vorteil, daß Halbleiterschalter 11 mit reduzierter Spannungsfestigkeit verwendet und damit höhere Taktfrequenzen erreicht werden können.

In Fig. 4 ist eine alternative Antriebsschaltung dargestellt, bei der zwei magnetisch gekoppelte Transformatoren 22, 23 vorgesehen sind, deren Primärwicklungen in Reihe geschaltet mit dem Wechselrichter 5 verbunden sind. Die Sekundärwicklungen der Transformatoren 22, 23 sind jedoch parallel geschaltet an den Vierquadrantensteller 7 angeschlossen. Bei dieser Antriebsschaltung ist bei einem Übersetzungsverhältnis des Transformators von 1:1 die am Zwischenkreiskondensator 8 anliegende Gleichspannung $U_{dc2}$ nur halb so groß wie die am Zwischenkreiskondensator 3 anstehende Gleichspannung $U_{dc1}$.

In Fig. 5 ist eine alternative Antriebsschaltung dargestellt, bei der ein dreiphasiger Transformator 35 vorgesehen ist, der primärseitig mit einem dreiphasigen Wechselrichter 34 und sekundärseitig mit dem dreiphasigen Pulsgleichrichter 33 beschaltet ist. Der dreiphasige Transformator 35 kann wie abgebildet in Stern/Sternschaltung, jedoch auch in Stern/Dreieckschaltung oder Dreieck/Sternschaltung oder in einer anderen allgemein bekannten Transformatorschaltung ausgebildet sein. Das erzielbare Spannungsverhältnis $U_{dc1} : U_{dc2}$ ist von der verwendeten Transformatorschaltung abhängig.

Allgemein haben die Schaltungsanordnungen der Figuren 4 und 5 den Vorteil einer Reduzierung der Spannung $U_{dc2}$ gegenüber der Spannung $U_{dc1}$. Dies hat einen positiven Einfluß bei der notwendigen Reduzierung der Wechselspannung des speisenden Netzes auf die dem Antriebsmotor zuführbare Drehspannung.

In Fig. 6 ist ein Antriebskonzept für ein Schienenfahrzeug mit mehreren netzseitig seriengeschalteten Teilstromrichtersystemen dargestellt. Zwischen dem Fahrdraht/Stromabnehmer-System 36 und dem Rad/Schiene-System 37 des Schienenfahrzeuges sind mehrere Teilstromrichtersysteme 40.1....40.n (n = 1, 2, 3...)in Serie schaltbar. Jedes dieser Teilstromrichtersysteme ist über einen separaten Schalter 39.1....39.n überbrückbar. Zwischen dem Fahrdraht/Stromabnehmer-System 36 und dem ersten Teilstromrichtersystem 40.1 ist eine Haupteingangsdrossel 38 vorgesehen, welche u. a. zur Überspannungsbegrenzung dient. Die Ausgänge der Teilstromrichtersysteme 40.1....40.n liegen parallel. An diese Ausgänge sind über Schalter 43.1....43.m zuschaltbare Teilstromrichtersysteme 41.1...41.m (m = 1, 2, 3...) angeschlossen, wobei jedes Teilstromrichtersystem 41.1...41.m mit einem Antriebsmotor 42.1...42.m verbunden ist.

Durch das in Fig. 6 gezeigte Konzept wird die relativ hohe Wechselspannung zwischen Fahrdraht/Stromabnehmer-System 36 und Rad/Schiene-Systeme 37 entsprechend der Anzahl n der Teilstromrichtersysteme 40.1...40.n aufgeteilt, so daß jeder Vierquadrantensteller bzw. Wechselrichter der ersten Teilsysteme der Teilstromrichtersysteme mit Halbleiterschaltern 11 üblicher Sperrspannungsfestigkeit betreibbar ist. Die Anzahl m der vorzusehenden Teilstromrichtersysteme 41.1...41.m richtet sich nach der erforderlichen Anzahl von Antriebsmotoren 42.1....42.m.

Dabei enthält ein Teilstromrichtersystem 40.1....40.n beispielsweise ein Eingangsdrosselsystem 4, einen Vierquadrantensteller 1, einen Zwischenkreiskondensator 3, gegebenenfalls einen Saugkreis 2, einen Wechselrichter 5 und einen Transformator 6. Das entsprechende Teilstromrichtersystem 41.1....41.m enthält einen Vierquadrantensteller 7, einen Zwischenkreiskondensator 8 und einen Wechselrichter 9, Alternativ können selbstverständlich auch die vorstehend erläuterten alternativen Anordnungen gemäß den Figuren 2 bis 5 verwendet werden.

Alternativ zu dieser Ausführungsform kann jedes Teilstromrichtersystem 40.1...40.n zusätzlich sekundärseitig des Transformators einen Vierquadrantensteller 7 und einen Zwischenkreiskondensator 8 aufweisen, wobei bei dieser alternativen Ausführungsform die Teilstromrichtersysteme 41.1...41.m dann lediglich den sekundärseitigen Wechselrichter 9 beinhalten.

Bei der Aufteilung des Gesamtsystems in mehrere seriengeschaltete Teilstromrichtersysteme 40.1 bis 40.n werden die am Wechselspannungsnetz liegenden Halbleiterschalter vorzugsweise versetzt getaktet. Des weiteren sind die einzelnen Eingangsdrosselsysteme der Teilstromrichtersysteme vorzugsweise als stromkompensierte Drosseln ausgeführt, wodurch parasitäre Ausgleichsströme zwischen den einzelnen Teilstromrichtersystemen gedämpft werden.

In Fig. 7 ist die Ausbildung eines Halbleiterschalters 11 dargestellt, wie er für alle vorstehend erläuterten Vierquadrantensteller und Wechselrichter verwendet wird. Der Halbleiterschalter 11 besteht aus einem IGBT-Leistungshalbleiter 44 mit antiparalleler Inversdiode 45. Vorteilhaft werden kostengünstige asymmetrische Halbleiter eingesetzt und nicht symmetrisch sperrende Halbleiter, wie sie beispielsweise bei einem Direktumrichter eingesetzt werden müssen.

In Fig. 8 ist eine Ausbildung gezeigt, bei der in Serie zur Primärwicklung des Transformators ein Wechselspannungskondensator $C_{AC1}$ und in Serie zur Sekundärwicklung ein Wechselspannungskondensator $C_{AC2}$ angeordnet ist. Alternativ hierzu sind auch Varianten einsetzbar, bei denen ein Wechselspannungskondensator $C_{AC1}$ oder $C_{AC2}$ vorgesehen ist.

Das vorgeschlagene Antriebssystem kann auch zu einer Mehrsystem-Schaltung erweitert werden, welche durch Umgruppierung von einzelnen Baukomponenten an unterschiedlichen Netzen - wie Gleichspannungsnetzen unterschiedlicher Gleichspannung und Wechselspannungsnetzen unterschiedlicher Wechselspannung und Frequenz - betrieben werden kann.

Um die Schaltverluste der im Bereich 8...20 kHz betriebenen Halbleiterschalter 11 zu minimieren, ist es vorteilhaft, den aus der Streuinduktivität des Transformators und den Kapazitäten in beiden Teilsystemen gebildeten Schwingkreis heranzuziehen und diese Halbleiterschalter in abgestimmter Art und Weise dann zu schalten, wenn der Stromfluß durch die Halbleiterschalter gerade ein Minimum aufweist. Deshalb sind diese Halbleiterschalter näherungsweise mit einer Schaltfrequenz $f_S$ zu betreiben, die folgende Bedingung erfüllt:

$$F_S = \frac{1}{\pi \sqrt{L_S \cdot C_E}}$$

oder

$$f_S = \frac{1}{2\pi \sqrt{L_S \cdot C_E}}$$

wobei $L_S$ die Streuinduktivität des Transformators ist und $C_E$ die Ersatzkapazität in beiden Teilsystemen darstellt, mit

$$C_E = \frac{C_{DC1} \cdot C_{DC2}}{C_{DC1} + C_{DC2}},$$

wobei $C_{DC1}$ die Kapazität im ersten Teilsystem und $C_{DC2}$ die Kapazität im zweiten Teilsystem darstellt. Dabei ist es vorteilhaft, die Kapazitäten $C_{DC1}$ und $C_{DC2}$ unsymmetrisch aufzuteilen, um insgesamt eine relativ kleine Kapazität $C_E$ zu realisieren. Wie vorstehend bereits erläutert, ist diese Maßnahme der Aufteilung der Kapazitäten aufgrund der harten Kopplung möglich.

Bei Einsatz beider Wechselspannungskondensatoren $C_{AC1}$ und $C_{AC2}$ gemäß Fig. 8 ergibt sich für die Ersatzkapazität $C_E$:

$$C_E = \frac{1}{\dfrac{1}{C_{DC1}} + \dfrac{1}{C_{DC2}} + \dfrac{1}{C_{AC1}} + \dfrac{1}{C_{AC2}}}$$

Bei Einsatz eines Wechselspannungskondensators $C_{AC1}$ ergibt sich für die Ersatzkapazität $C_E$:

$$C_E = \frac{1}{\dfrac{1}{C_{DC1}} + \dfrac{1}{C_{DC2}} + \dfrac{1}{C_{AC1}}}.$$

Bei Einsatz eines Wechselspannungskondensators $C_{AC2}$ ergibt sich für die Ersatzkapazität $C_E$:

$$C_E = \frac{1}{\dfrac{1}{C_{DC1}} + \dfrac{1}{C_{DC2}} + \dfrac{1}{C_{AC2}}}.$$

## Patentansprüche

1.  Antriebssystem für ein Schienenfahrzeug mit mehreren, zwischen einem Fahrdraht/Stromabnehmer-System (36) und einem Rad/Schiene-System (37) über mindestens eine Drossel (38) in Reihe geschalteten Teilstromrichtersystemen (40.1 bis 40.n), **dadurch gekennzeichnet, dass** jedes Teilstromrichtersystem aus mindestens einem primärseitigen Vierquadrantensteller (1), mindestens einem primärseitigen Zwischenkreiskondensator (3, 12/13), mindestens einem primärseitigen Wechselrichter (5, 14/15, 34) und mindestens einem Transformator (6, 16/17, 22123, 35) besteht und dass sekundärseitig parallelgeschaltete Teilstromrichtersysteme einen gemeinsamen sekundärseitigen Wechselspannungszwischenkreis bilden.

2.  Antriebssystem für ein Schienenfahrzeug mit mehreren, zwischen einem Fahr- draht/Stromabnehmer-System (36) und einem Rad/Schiene-System (37) über mindestens eine Drossel (38) in Reihe geschalteten Teilstromrichtersystemen (40.1 bis 40.n), **dadurch gekennzeichnet, dass** jedes Teilstromrichtersystem aus mindestens einem primärseitigen Vierquadrantensteller (1), mindestens einem primärseitigen Zwischenkreiskondensator (3, 12/13), mindestens einem primärseitigen Wechselrichter (5, 14/15, 34), mindestens einem Transformator (6, 16/17, 22123, 35) und mindestens einem sekundärseitigen Vierquadrantensteller (7, 18/19, 33) besteht und dass sekundärseitig parallelgeschaltete Teilstromrichtersysteme einen gemeinsamen sekundärseitigen Gleichspannungszwischenkreis bilden.

3.  Antriebssystem nach Anspruch 1 oder 2, **dadurch gekennzeichnet, daß** jedes Teilstromrichtersystem (40.1 bis 40.n) mindestens einen Wechselspannungskondensator ($C_{A1}$, $C_{A2}$) auf der Primär- oder Sekundärseite des Transformators (6, 16/17, 22/23, 35) in Serie zum Transformator aufweist.

4.  Antriebssystem nach Anspruch 1 oder 2, **dadurch gekennzeichnet, daß** jedes Teilstromrichtersystem (40.1 bis 40.n) mindestens einen Wechselspannungskondensator ($C_{A1}$, $C_{A2}$) auf der Primär- und Sekundärseite des Transformators (6, 16/17, 22/23, 35) in Serie zum Transformator aufweist.

5.  Antriebssystem nach einem der Ansprüche 2 bis 4, **dadurch gekennzeichnet, daß** jedes Teilstromrichtersystem (40.1 bis 40.n) mindestens einen sekundärseitigen Zwischenkreiskondensator (8, 20/21) aufweist.

6.  Antriebssystem nach einem der Ansprüche 2 bis 4, **dadurch gekennzeichnet, daß** der gemeinsame sekundärseitige Gleichspannungszwischenkreis einen gemeinsamen Zwischenkreiskondensator aufweist.

**7.** Antriebssystem nach einem der Ansprüche 1 bis 6, **dadurch gekennzeichnet, daß** jedes Teilstromrichtersystem einen Saugkreis (2) parallel zum primärseitigen oder sekundärseitigen Zwischenkreiskondensator (3, 8, 12/13, 20/21) aufweist.

**8.** Antriebssystem nach einem der Ansprüche 2 bis 6, **dadurch gekennzeichnet, daß** der gemeinsame sekundärseitige Gleichspannungszwischenkreis einen gemeinsamen Saugkreis aufweist.

**9.** Antriebssystem nach einem der Ansprüche 2 bis 8, **dadurch gekennzeichnet, daß** bei den Teilstromrichtersystemen (40.1 bis 40.n) jeweils zwei induktiv gekoppelte Transformatoren (16, 17) vorgesehen sind, die primärseitig mit je einem eigenen Wechselrichter (14, 15) und sekundärseitig mit je einem eigenen Vierquadrantensteller (18, 19) beschaltet sind, wobei die Gleichspannungsanschlüsse dieser Wechselrichter und Vierquadrantensteller mit je einem eigenen Zwischenkreiskondensator (12, 13; 20, 21) verbunden und diese Zwischenkreiskondensatoren jeweils in Reihe geschaltet sind.

**10.** Antriebssystem nach einem der Ansprüche 2 bis 8, **dadurch gekennzeichnet, daß** bei den Teilstromrichtersystemen (40.1 bis 40.n) jeweils zwei Transformatoren vorgesehen sind, deren Primärwicklungen in Reihe geschaltet am Wechselrichter (5) und deren Sekundärwicklungen parallel geschaltet am Vierquadrantensteller (7) liegen.

**11.** Antriebssystem nach einem der Ansprüche 2 bis 8, **dadurch gekennzeichnet, daß** bei den Teilstromrichtersystemen (40.1 bis 40.n) jeweils ein dreiphasiger Transformator (35) vorgesehen ist, dessen Primärwicklungen mit einem dreiphasigen Wechselrichter (34) und dessen Sekundärwicklungen mit einem dreiphasigen Pulsgleichrichter (33) verbunden sind.

**12.** Antriebssystem nach einem der Ansprüche 1 bis 11, **dadurch gekennzeichnet, daß** jeder Halbleiterschalter (11) der Vierquadrantensteller und Wechselrichter als IGBT-Leistungshalbleiter (44) mit paralleler Inversdiode (45) ausgebildet ist.

**13.** Verfahren zur Ansteuerung der Halbleiterschalter der transformatorseitigen Stromrichter eines Antriebssystems gemäß einem der Ansprüche 1 bis 12, **dadurch gekennzeichnet, daß** diese Halbleiterschalter mit einer Schaltfrequenz $f_S$ betrieben werden, die näherungsweise eine der folgenden Bedingungen erfüllt:

$$f_S = \frac{1}{\pi\sqrt{L_S \cdot C_E}}$$

oder

$$f_S = \frac{1}{2\pi\sqrt{L_S \cdot C_E}}$$

wobei $L_S$ die Summe der Streuinduktivitäten des Transformators ist und $C_E$ die Ersatzkapazität in den primärseitigen und sekundärseitigen Teilsystemen darstellt, mit

$$C_E = \frac{C_{DC1} \cdot C_{DC2}}{C_{DC1} + C_{DC2}},$$

wobei $C_{DC1}$ die Gleichspannungskapazität im primärseitigen Teilsystem und $C_{DC2}$ die Gleichspannungskapazität im sekundärseitigen Teilsystem darstellt.

**14.** Verfahren nach Anspruch 13, **dadurch gekennzeichnet, daß** die Ersatzkapazität $C_E$ bestimmt wird durch:

$$C_E = \frac{1}{\dfrac{1}{C_{DC1}} + \dfrac{1}{C_{DC2}} + \dfrac{1}{C_{AC1}} + \dfrac{1}{C_{AC2}}}$$

oder

$$C_E = \frac{1}{\dfrac{1}{C_{DC1}} + \dfrac{1}{C_{DC2}} + \dfrac{1}{C_{AC1}}}.$$

oder

$$C_E = \frac{1}{\dfrac{1}{C_{DC1}} + \dfrac{1}{C_{DC2}} + \dfrac{1}{C_{AC2}}}.$$

wobei $C_{AC1}$, $C_{AC2}$ die Kapazität der Wechselspannungskondensatoren darstellt.

**Claims**

**1.** Traction system for a rail vehicle having a number of converter element systems (40.1 to 40.n) which are connected in series via at least one inductor (38) between an overhead wire/moving contact system (36) and a wheel/rail system (37), **characterized in that** each converter element system comprises at least one primary-side four-quadrant controller (1), at least one primary-side intermediate circuit capacitor (3, 12/13), at least one primary-side inverter (5, 14/15, 34) and at least one transformer (6, 16/17, 22/23, 35) and **in that** converter element systems which are connected in parallel on the secondary side form a common secondary-side AC voltage intermediate circuit.

2. Traction system for a rail vehicle having a number of converter element systems (40.1 to 40.n) which are connected in series via at least one inductor (38) between an overhead wire/moving contact system (36) and a wheel/rail system (37), **characterized in that** each converter element system comprises at least one primary-side four-quadrant controller (1), at least one primary-side intermediate circuit capacitor (3, 12/13), at least one primary-side inverter (5, 14/15, 34), at least one transformer (6, 16/17, 22/23, 35) and at least one secondary-side four-quadrant controller (7, 18/19, 33), and **in that** converter element systems which are connected in parallel on the secondary side form a common secondary-side DC voltage intermediate circuit.

3. Traction system according to Claim 1 or 2, **characterized in that** each converter element system (40.1 to 40.n) has at least one AC voltage capacitor ($C_{A1}$, $C_{A2}$) on the primary or secondary side of the transformer (6, 16/17, 22/23, 35) in series with the transformer.

4. Traction system according to Claim 1 or 2, **characterized in that** each converter element system (40.1 to 40.n) has at least one AC voltage capacitor ($C_{A1}$, $C_{A2}$) on the primary and secondary side of the transformer (6, 16/17, 22/23, 35) in series with the transformer.

5. Traction system according to one of Claims 2 to 4, **characterized in that** each converter element system (40.1 to 40.n) has at least one secondary-side intermediate circuit capacitor (8, 20/21).

6. Traction system according to one of Claims 2 to 4, **characterized in that** the common secondary-side DC voltage intermediate circuit has a common intermediate circuit capacitor.

7. Traction system according to one of Claims 1 to 6, **characterized in that** each converter element system has a series tuned circuit (2) in parallel with the primary-side or secondary-side intermediate circuit capacitor (3, 8, 12/13, 20/21).

8. Traction system according to one of Claims 2 to 6, **characterized in that** the common secondary-side DC voltage intermediate circuit has a common series tuned circuit.

9. Traction system according to one of Claims 2 to 8, **characterized in that** the converter element systems (40.1 to 40.n) each have two inductively coupled transformers (16, 17) which are connected on the primary side to in each case one dedicated inverter (14, 15) and are connected on the secondary side to in each case one dedicated four-quadrant controller (18, 19), with the DC voltage connections of these inverters and four-quadrant controllers being connected to in each case one dedicated intermediate circuit capacitor (12, 13; 20, 21), and these intermediate circuit capacitors each being connected in series.

10. Traction system according to one of Claims 2 to 8, **characterized in that** the converter element systems (40.1 to 40.n) each have two transformers, whose primary windings are connected in series to the inverter (5) and whose secondary windings are connected in parallel to the four-quadrant controller (7).

11. Traction system according to one of Claims 2 to 8, **characterized in that** the converter element systems (40.1 to 40.n) each have a three-phase transformer (35), whose primary windings are connected to a three-phase inverter (34), and whose secondary windings are connected to a three-phase pulse-controlled rectifier (33).

12. Traction system according to one of Claims 1 to 11, **characterized in that** each semiconductor switch (11) in the four-quadrant controllers and inverters is in the form of an IGBT power semiconductor (44) with a parallel inverse diode (45).

13. Method for driving the semiconductor switches in the transformer-side converters of a traction system according to one of Claims 1 to 12, **characterized in that** the semiconductor switches are operated at a switching frequency $f_S$ which approximately satisfies one of the following conditions:

$$f_S = \frac{1}{\pi \sqrt{L_S \cdot C_E}}$$

or

$$f_S = \frac{1}{2\pi \sqrt{L_S \cdot C_E}}$$

where $L_S$ is the sum of the stray inductances in the transformer and $C_E$ is the equivalent capacitance in the primary-side and secondary-side subsystems, where

$$C_E = \frac{C_{DC1} \cdot C_{DC2}}{C_{DC1} + C_{DC2}},$$

where $C_{DC1}$ represents the DC voltage capacitance in the primary-side subsystem and $C_{DC2}$ represents the DC voltage capacitance in the secondary-side subsystem.

14. Method according to Claim 13, **characterized in that** the equivalent capacitance $C_E$ is given by:

$$C_E = \frac{1}{\frac{1}{C_{DC1}} + \frac{1}{C_{DC2}} + \frac{1}{C_{AC1}} + \frac{1}{C_{AC2}}}$$

or

$$C_E = \frac{1}{\frac{1}{C_{DC1}} + \frac{1}{C_{DC2}} + \frac{1}{C_{AC1}}}$$

or

$$C_E = \frac{1}{\frac{1}{C_{DC1}} + \frac{1}{C_{DC2}} + \frac{1}{C_{AC2}}}.$$

where ($C_{AC1}$, $C_{AC2}$) represents the capacitance of the AC voltage capacitors.

## Revendications

1. Système d'entraînement pour un véhicule sur rails comprenant plusieurs systèmes convertisseurs de puissance partiels (40.1 à 40.n) branchés en série entre un ensemble conducteur aérien / pantographe (36) et un ensemble roue / rail (37) par le biais d'au moins une bobine (38), **caractérisé en ce que** chaque système convertisseur de puissance partiel se compose d'au moins un élément de commande à quatre cadrans (1) du côté primaire, d'au moins un condensateur de circuit intermédiaire (3, 12/13) du côté primaire, d'au moins un onduleur (5, 14/15, 34) du côté primaire et d'au moins un transformateur (6, 16/17, 22123, 35) et que les systèmes convertisseurs de puissance partiels branchés en parallèle du côté secondaire forment un circuit intermédiaire à tension alternative commun du côté secondaire.

2. Système d'entraînement pour un véhicule sur rails comprenant plusieurs systèmes convertisseurs de puissance partiels (40.1 à 40.n) branchés en série entre un ensemble conducteur aérien / pantographe (36) et un ensemble roue / rail (37) par le biais d'au moins une bobine (38), **caractérisé en ce que** chaque système convertisseur de puissance partiel se compose d'au moins un élément de commande à quatre cadrans (1) du côté primaire, d'au moins un condensateur de circuit intermédiaire (3, 12/13) du côté primaire, d'au moins un onduleur (5, 14/15, 34) du côté primaire, au moins un transformateur (6, 16/17, 22123, 35) et d'au moins un élément de commande à quatre cadrans (7, 18/19, 33) du côté secondaire et que les systèmes convertisseurs de puissance partiels branchés en parallèle du côté secondaire forment un circuit intermédiaire à tension continue commun du côté secondaire.

3. Système d'entraînement selon la revendication 1 ou 2, **caractérisé en ce que** chaque système convertisseur de puissance partiel (40.1 à 40.n) présente au moins un condensateur de tension alternative ($C_{A1}$, $C_{A2}$) du côté primaire ou secondaire du transformateur (6, 16/17, 22/23, 35) en série avec le transformateur.

4. Système d'entraînement selon la revendication 1 ou 2, **caractérisé en ce que** chaque système convertisseur de puissance partiel (40.1 à 40.n) présente au moins un condensateur de tension alternative ($C_{A1}$, $C_{A2}$) du côté primaire et secondaire du transformateur (6, 16/17, 22/23, 35) en série avec le transformateur.

5. Système d'entraînement selon l'une des revendications 2 à 4, **caractérisé en ce que** chaque système convertisseur de puissance partiel (40.1 à 40.n) présente au moins un condensateur de circuit intermédiaire (8, 20/21) du côté secondaire.

6. Système d'entraînement selon l'une des revendications 2 à 4, **caractérisé en ce que** le circuit intermédiaire à tension continue commun du côté secondaire présente un condensateur de circuit intermédiaire commun.

7. Système d'entraînement selon l'une des revendications 1 à 6, **caractérisé en ce que** chaque système convertisseur de puissance partiel présente un circuit d'absorption (2) en parallèle avec le condensateur de circuit intermédiaire (3, 8, 12/13, 20/21) du côté primaire ou du côté secondaire.

8. Système d'entraînement selon l'une des revendications 2 à 6, **caractérisé en ce que** le circuit intermédiaire à tension continue commun du côté secondaire présente un circuit d'absorption commun.

9. Système d'entraînement selon l'une des revendications 2 à 8, **caractérisé en ce que** deux transformateurs (16, 17) couplés de manière inductive sont à chaque fois prévus sur les systèmes convertisseurs de puissance partiels (40.1 à 40.n) dont le primaire est à chaque fois relié à son propre onduleur (14, 15) et le secondaire est à chaque fois relié à son propre élément de commande à quatre cadrans (18, 19), les bornes de tension continue de ces onduleurs et de ces éléments de commande à quatre cadrans étant chacune reliée à un condensateur de circuit intermédiaire (12, 13 ; 20, 21) et ces condensateurs de circuit intermédiaire sont à chaque fois branchés en série.

10. Système d'entraînement selon l'une des revendications 2 à 8, **caractérisé en ce que** deux transformateurs sont à chaque fois prévus sur les systèmes convertisseurs de puissance partiels (40.1 à 40.n) dont les enroulements primaires sont branchés en série à l'onduleur (5) et dont les enroulements secondaires sont branchés en parallèle à l'élément de commande à quatre cadrans (7).

11. Système d'entraînement selon l'une des revendications 2 à 8, **caractérisé en ce qu'**un transformateur triphasé (35) est à chaque fois prévu sur les systèmes convertisseurs de puissance partiels (40.1 à 40.n) dont les enroulements primaires sont reliés avec un onduleur triphasé (34) et dont les enroulements secondaires sont reliés à un redresseur à impulsions triphasé (33).

12. Système d'entraînement selon l'une des revendications 1 à 11, **caractérisé en ce que** chaque commutateur à semiconducteur (11) de l'élément de commande à quatre cadrans et de l'onduleur est réalisé sous la forme d'un semiconducteur de puissance IGBT (44) avec une diode inverse (45) en parallèle.

13. Procédé de commande du commutateur à semiconducteur du redresseur du côté du transformateur d'un système d'entraînement selon l'une des revendications 1 à 12, **caractérisé en ce que** ce commutateur à semiconducteur fonctionne à une fréquence de commutation $f_s$ qui satisfait approximativement à l'une des conditions suivantes :

$$f_s = \frac{1}{\pi \sqrt{L_S \cdot C_E}}$$

ou

$$f_s = \frac{1}{2\pi \sqrt{L_S \cdot C_E}}$$

où $L_S$ désigne la somme des inductances parasites du transformateur et $C_E$ la capacité équivalente dans les systèmes partiels du côté primaire et du côté secondaire, avec

$$C_E = \frac{C_{DC1} \cdot C_{DC2}}{C_{DC1} + C_{DC2}},$$

où $C_{DC1}$ désigne la capacité en tension continue dans le système partiel du côté primaire et $C_{DC2}$ la capacité en tension continue dans le système partiel du côté secondaire.

14. Procédé selon la revendication 13, **caractérisé en ce que** la capacité équivalente $C_E$ est déterminée par :

$$C_E = \frac{1}{\dfrac{1}{C_{DC1}} + \dfrac{1}{C_{DC2}} + \dfrac{1}{C_{AC1}} + \dfrac{1}{C_{AC2}}}$$

ou

$$C_E = \frac{1}{\dfrac{1}{C_{DC1}} + \dfrac{1}{C_{DC2}} + \dfrac{1}{C_{AC1}}}.$$

ou

$$C_E = \frac{1}{\dfrac{1}{C_{DC1}} + \dfrac{1}{C_{DC2}} + \dfrac{1}{C_{AC2}}}.$$

où $C_{AC1}$, $C_{AC2}$ désignent les condensateurs de tension alternative.

Fig.1

Fig.2

Fig.3

Fig.4

## Fig.5

## Fig.6

## Fig.7

## Fig 8

$C_{AC1}$    $C_{AC2}$